# EUROPÄISCHE PATENTSCHRIFT

(11) **EP 3 763 970 B1**
(45) Veröffentlichungstag und Bekanntmachung des Hinweises auf die Patenterteilung: **11.05.2022**
(21) Anmeldenummer: 20165654.3
(22) Anmeldetag: 25.03.2020
(51) Int. Cl.: F16H 25/24

(54) **KUGELGEWINDETRIEB, SPINDELMUTTER UND VERFAHREN ZUM HERSTELLEN EINER SPINDELMUTTER**
BALL SCREW DRIVE, SPINDLE NUT AND METHOD FOR PRODUCING A SPINDLE NUT
VIS À BILLES, ÉCROU DE BROCHE ET PROCÉDÉ DE FABRICATION D'UN ÉCROU DE BROCHE

(43) Veröffentlichungstag der Anmeldung: 13.01.2021
(73) Patentinhaber: SFS Group International AG, 9435 Heerbrugg (CH)
(72) Erfinder: Sinz, Daniel, 6921 Kennelbach (AT); Frei, Stefan, 7000 Chur (CH)

(56) Entgegenhaltungen:
- EP-A2- 1 540 207
- WO-A2-2008/129692
- DE-A1-102013 210 558

## Beschreibung

Die vorliegende Erfindung betrifft einen Kugelgewindetrieb, eine Spindelmutter und ein Verfahren zum Herstellen einer Spindelmutter.

Als Kugelumlaufspindel oder auch Kugelgewindetrieb wird üblicherweise ein Wälzschraubtrieb mit Kugeln als Wälzkörpern bezeichnet. Zu den Hauptbestandteilen eines Kugelgewindetriebs zählen eine Gewindespindel und eine diese Spindel umgreifende Spindelmutter. Zwischen diesen beiden Bauteilen laufen im Betrieb Kugeln. Die Gewindezüge der Gewindespindel wie auch der Spindelmutter sind als Kugelrillen mit einem geeigneten Profil ausgebildet und komplementär so aufeinander abgestimmt, dass sie im montierten Zustand gemeinsam einen Kugelkanal bzw. eine Kugelführung bilden. Anders als bei einer Schraube-Mutter-Verbindung, bei der die Gewindeflanken flächig aufeinander gleiten, übernehmen beim Kugelgewindetrieb die umlaufenden Kugeln im Gewinde die Lastübertragung zwischen Mutter und Spindel. Die flächige Gleitbewegung wird also durch eine Rollbewegung ersetzt, was mit verringerter Reibung einhergeht.

Um einen geschlossenen Umlaufpfad für die Kugeln zu erhalten, werden Kugelumlenkungen eingesetzt. Diese haben die Aufgabe, die Kugeln an einer ersten Stelle aus der Kugelführung zwischen Spindelmutter und Gewindespindel herauszuheben und an einer zweiten Stelle wieder zuzuführen. Die Kugelrückführung stellt also einen Bypass dar, der eine oder mehrere Gewindezüge des Mutter-Spindel-Systems überbrückt und damit einen geschlossenen Umlaufpfad für die Kugeln eines Kugelgewindetriebs vervollständigt. In der Regel werden die Kugeln in der Spindelmutter radial nach außen aus der Kugelrille ausgehoben und innerhalb oder außerhalb der Spindelmutter in einem Kanal oder einem Rohr geführt, bevor sie an der dafür vorgesehenen Stelle wieder in den Kugelkanal zwischen Gewindespindel und Spindelmutter eingesetzt werden.

Technisch gesehen arbeitet ein Kugelgewindetrieb als Schraubgetriebe, das eine Drehbewegung in eine Längsbewegung umsetzen kann, oder umgekehrt, wobei die Unter- bzw. Übersetzung durch die Dimensionierung der Gewindespindel und die Steigung des Gewindes bestimmt wird. Kugelgewindetriebe können im Grundsatz auf zwei Arten betrieben werden. Wird die Spindelmutter ortsfest, aber drehbar gelagert, die Gewindespindel jedoch drehfest, aber längsverschieblich, so bewegt sich die Gewindespindel entlang ihrer Längsachse, sobald die Mutter angetrieben wird. Im zweiten Fall wird die Gewindespindel ortsfest, aber drehbar gelagert und die Spindelmutter längsbeweglich drehfest gelagert. Dies führt bei angetriebener Gewindespindel zu einer Linearbewegung der Spindelmutter entlang der Gewindespindel.

Kugelgewindetriebe werden in vielen technischen Anwendungen eingesetzt, vor allem im Maschinenbau und dort bevorzugt in Werkzeugmaschinen. Zunehmend kommen Kugelgewindetriebe aber auch als Längsantriebe in Bereichen zum Einsatz, wo bisher Hydraulik- oder Pneumatiksysteme Verwendung fanden, z.B. in Pressen, Spritzgießmaschinen und Servolenkungen. Zudem spielen Kugelgewindetriebe auch eine zunehmende Rolle in elektromechanischen und elektro-hydraulischen Bremssystemen, wo Kugelgewindetriebe als Ersatz für hydraulische Bremszylinder oder parallel zu bekannten Bremssystemen bei Bremsassistenzsystemen eingesetzt werden. Dort helfen sie, von Elektromotoren angetrieben, die Bremskraft eines Fahrers zu verstärken bzw. als Teil eines Sicherheitssystems einen (Not-)Bremsvorgang einzuleiten oder zu unterstützen. Auch rein elektrisch betriebene Bremssysteme mit Kugelgewindetrieben als Bremszylinderersatz an jedem Rad werden damit möglich.

Im Folgenden soll die Bauweise einer Spindelmutter näher betrachtet werden. Sie umfasst im Grundsatz einen hohlzylindrischen Grundkörper mit einem axialen Innengewinde, das als Oberschale der Kugelumlaufrille ausgebildet ist. Dieser Grundkörper kann zur Gänze als Dreh-/Frästeil hergestellt werden, was sehr zeitaufwändig ist. Seit einiger Zeit werden die Spindelmuttern daher weitgehend als Pressteile aus Drahtabschnitten hergestellt, die aus Gründen der Maßgenauigkeit nur an wenigen Punkten drehend bzw. fräsend nachgearbeitet werden müssen. Die Zusatzoperationen betreffen (neben dem Innengewinde) vor allem die Kugelumlenkungen, die im Stand der Technik häufig als Längsbohrungen verdeckt in der Wandung der Spindelmutter ausgeführt wurden, parallel zu deren Längsachse. Diese Längsbohrungen sind üblicherweise über die gesamte Länge als Durchgangsbohrungen ausgeführt, weil diese nur so zu reinigen sind und außerdem die Kugelumlenkung direkt an der Stirnseite der Spindelmutter angebracht werden kann. Dieser Kugelkanal kann an definierten Stellen radial von außen nach innen aufgebohrt oder -gefräst werden, dort wo die Kugeln aus dem Umlaufkanal zwischen Spindelmutter und Gewindespindel entnommen bzw. zurückgeführt werden sollen. Die Entnahme bzw. Rückführung wird dabei bekannterweise durch Einsatzelemente (Inserts) bewerkstelligt, die aus Metall, Kunststoff oder einer Kombination von solchen Elementen gefertigt werden. Die komplexe Geometrie dieser Inserts bzw. Kugelumlenkelemente lässt sich als Spritzgussteil oder Blechformteil leichter abbilden denn als zu fräsende Geometrie in der Wandung der Spindelmutter.

Klassisch entfällt ein erheblicher Aufwand der Zusatzoperationen auf die Anfertigung des eigentlichen Kugelführungskanals zwischen der Entnahme- und Rückführungsstelle. Er wird üblicherweise als Kanal gebohrt oder als Nutrille gefräst. In letzterer Ausführung muss der Kanal nach Montage des Kugelgewindetriebs und dem Befüllen mit Kugeln abgedeckt werden. Das kann durch eine aufgeschobene bzw. aufzupressende Manschette geschehen oder aber durch ein sowieso an dieser Stelle vorzusehendes Lager, eine Flanschhalterung oder eine Hülse.

Insofern sind Kugelgewindetriebe vergleichsweise komplexe, aufwändig zu produzierende Bauelemente und eine Massenfertigung bei vertretbaren Kosten erfordert neuartige Ansätze.

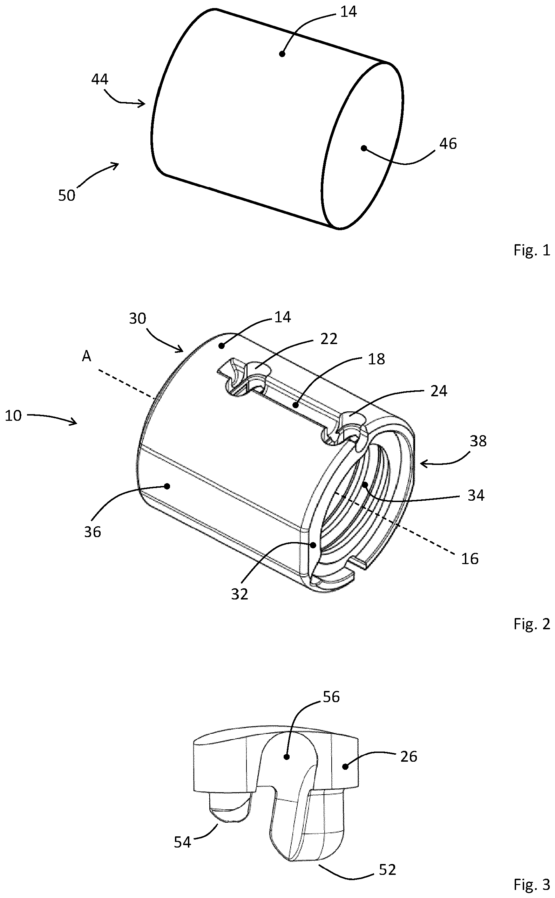

Das Dokument EP 1 540 207 A2 bzw. WO 2004/027 286 A2, das den nächstliegenden Stand der Technik darstellt, zeigt ein Verfahren zum Herstellen einer Spindelmutter (2) für einen Kugelgewindetrieb mit den Schritten: Bereitstellen eines im Wesentlichen zylindrischen Werkstücks (Fig. 1) mit einer ersten Stirnseite und einer zweiten Stirnseite sowie einer Mantelfläche; Umformen des Werkstücks durch Ausstanzen mindestens einer Durchgangsöffnung (7) in der Mantelfläche des Werkstücks von radial innen nach radial aussen; Einbringen eines Innengewindes (4) in die Zentralöffnung durch einen Gewindedorn (18); und Ausbilden eines Überleitungskanals durch Einbringen eines Umlenkstückes (8) in die Durchgangsöffnung (7).

Der Erfindung liegt die Aufgabe zugrunde, ein Verfahren zum Herstellen einer Spindelmutter anzugeben, welches im Vergleich zum Stand der Technik vereinfacht und damit kostensparend ist. Die mit dem Verfahren hergestellten Spindelmuttern und somit auch die Kugelgewindetriebe, welche diese Spindelmuttern enthalten, sollen präzise gefertigt, zuverlässig und unter jeglichen Belastungen langlebig sein.

Diese Aufgabe wird mit den Merkmalen des unabhängigen Anspruches gelöst. Vorteilhafte Ausführungsformen der Erfindung sind in den abhängigen Ansprüchen angegeben.

Die Erfindung betrifft ein Verfahren zum Herstellen einer metallischen Spindelmutter für einen Kugelgewindetrieb mit den Schritten:
- Bereitstellen eines im Wesentlichen zylindrischen Werkstücks aus Metall mit einer ersten Stirnseite und einer zweiten Stirnseite sowie einer Mantelfläche,
   Umformen des Werkstücks durch Einpressen einer axialsymmetrischen Zentralöffnung und durch gleichzeitiges Einpressen mindestens eines ersten und eines zweiten, achsparallel ausgerichteten Kanals in die Mantelfläche des Werkstücks, wobei die Zentralöffnung und die Kanäle zu der ersten Stirnseite hin offen sind, und
- Einbringen eines Innengewindes in die Zentralöffnung, und
- Ausbilden mindestens des ersten Kanals als Überleitungskanal durch Einbringen von mindestens zwei radial verlaufenden Durchtrittsöffnungen in besagten Kanal zur Aufnahme von Umlenkeinsätzen.

Insbesondere werden also die Kanäle nicht gefräst, sondern in die Mantelfläche des Werkstücks eingepresst. Dieses Einpressen erfolgt zeitgleich zum Umformen der übrigen Grundform der Spindelmutter. Würde man etwa zuerst die Zentralöffnung umformen, um danach die Kanäle einzuformen, so würde mit dem zweiten Umformschritt die Form der Zentralöffnung wieder zerstört. Dies gilt auch umgekehrt, wenn zunächst die Kanäle und dann erst die Zentralöffnung eingeformt würden, denn das Einformen der Zentralöffnung würde die Kanäle nicht unverändert lassen. Die Kanäle verlaufen achsparallel, was durch das axiale Zustellen des Umformwerkzeugs bedingt ist. Da ferner die Kanäle von einer Stirnseite her eingepresst werden, sind sie zu dieser Stirnseite hin offen. Der Begriff Kanal ist dabei tatsächlich so wörtlich zu verstehen, dass der Kanal durch das Einpressen in der Mantelfläche als Rinne, Rille bzw. Nut ausgebildet wird, die radial nach aussen geöffnet vorliegt (von der Längsmittelachse des Werkstücks her betrachtet).

Zum Sicherstellen einer ausgleichenden Materialverdrängung werden immer zwei Kanäle eingepresst. Bevorzugt ist die Winkelanordnung der Kanäle in der Mantelfläche an der Mittenlängsachse des Werkstücks gespiegelt, sie sind also um 180 Grad bezogen auf die Zylindersymmetrie des Werkstücks versetzt. Hierdurch erhält man den zusätzlichen Vorteil, dass Unwuchten aufgrund der Symmetrie zur Längsachse bei der Drehung der Mutter minimiert werden. Auf diese Weise wird also aus einem zylindrischen Werkstück aus Vollmaterial ein Zwischenprodukt für eine Spindelmutter gefertigt, welches durch insbesondere materialabtragende Nachbehandlung fertig gestellt werden kann.

Von der 180° versetzten Anordnung der Kanäle in der Mantelfläche kann auch abgewichen werden, zum Beispiel wenn die Mutter bei der Anwendung starr verbaut wird und so Unwuchten durch Rotation keine Rolle spielen. Untersuchungen haben gezeigt, dass eine Winkelanordnung zwischen 100° und 180° Versatz am Umfang technisch realisierbar sind, wobei Werte um 120° und 180° bevorzugt sind.

Weiterhin kann alternativ, wenn nur der erste Kanal als Überleitungskanal ausgebildet werden soll und der zweite Kanal somit nicht als Überleitungskanal zur Verfügung stehen muss, dieser zweite Kanal mit vereinfachtem Querschnitt hergestellt werden. Dies kann z.B. bedeuten, dass der Kanal mit flacher und mit flachere Böschung ausgelegt wird, was eine verbesserte Standzeit des Presswerkzeugs erlaubt. Wichtig ist, um den oben beschriebenen Effekt der symmetrischen Materialverdrängung zu erhalten, dass die Einpresstiefe in Längsrichtung sowie das Volumen an umgeformtem Material des zweiten Kanals dem des ersten Kanals weiterhin im Wesentlichen entspricht.

Denkbar wäre z.B., dass der erste Kanal als Überleitungskanal im Querschnitt als verrundetes U-Querschnittsprofil hergestellt wird, während der zweite Kanal als einfaches V-Querschnittsprofil realisiert wird. Die oben angestellten Überlegungen zur Materialverdrängung behalten ihre Gültigkeit, daher auch die Forderung, dass die Umformung vom Volumen her vergleichbar sein muss (innerhalb +/- 10% bis 15%, je nach Geometrie der Spindelmutter).

Der Verfahrensschritt "Einbringen eines Innengewindes in die Zentralöffnung" kann durch einen (Innengewinde-)Formvorgang erzielt werden, durch Gewindefräsen bzw. eine Kombination von beidem. Dabei wird üblicherweise zuerst das Gewinde spanend vorgeformt und anschliessend durch einen Umformschritt fertiggestellt. Dies hat den Vorteil, dass die resultierenden Oberflächen wegen der Verdichtung beim Formvorgang eine grössere Oberflächenhärte aufweisen. Ein abschliessender Schleifvorgang zur Optimierung ist möglich, aber nicht zwingend.

Das hier definierte Verfahren ist nicht nur besonders einfach und kostengünstig im Vergleich zu Verfahren des Standes der Technik, es liefert auch ein präzise gefertigtes Produkt mit einer langen Standzeit. Beim Umformen wird im Gegensatz zu Fertigungsverfahren, die materialabtragend sind, der Stoffzusammenhalt gänzlich beibehalten. Die plastischen Formänderungen des Werkstücks erfolgen aufgrund eines Fließens auf kristallographisch bevorzugten Gleitebenen. Die metallischen Bereiche zwischen diesen Gleitebenen bleiben praktisch unverändert, so dass durch den Umformvorgang keine makroskopischen Änderungen der Materialbeschaffenheit zu erwarten sind. Die Materialqualität wird also praktisch gänzlich vom Ausgangswerkstück vorherbestimmt. Bei geeigneter Verfahrensführung entstehen in dem Werkstück keine Singularitäten, welche bei Nutzung des Werkstücks zum Versagen führen könnten, wodurch mit großer Langlebigkeit zu rechnen ist. Mit dem beschriebenen Verfahren, welches im Wesentlichen auf einer Umformung beruht, liegt somit ein einfaches und kostengünstiges Verfahren vor. Die Kosteneinsparung gründet sich wesentlich darauf, dass zeitaufwendige und werkzeugintensive materialabtragende Verfahrensschritte einer herkömmlichen Fertigung vermieden werden und dass der Umformvorgang ohne Materialverlust vonstattengeht. Ferner wird durch das Verfahren eine Spindelmutter zur Verfügung gestellt, welche geeignet ist, hohen Anforderungen gerecht zu werden.

Nützlicherweise ist vorgesehen, dass das Einpressen der Kanäle vor dem Erreichen der zweiten Stirnseite endet, so dass die Kanäle zu der zweiten Stirnseite hin geschlossen sind. Es ist natürlich durchaus auch möglich, die Überleitungskanäle bis zur zweiten Stirnseite hin durchzupressen. Allerdings kann es dabei zu einem Ausfransen der zweiten Stirnseite kommen, so dass eine Nachbearbeitung erforderlich ist. Dies kann vorteilhaft vermieden werden, dass das Einpressen vor dem Erreichen der zweiten Stirnseite endet.

Das Verfahren ist dadurch weitergebildet, dass die Durchtrittsöffnungen gefräst und/oder gebohrt werden. Im Hinblick auf die Durchtrittsöffnungen wird also vorzugsweise auf ein materialabtragendes Verfahren zurückgegriffen. Dies kann jedoch auch ohne großen Aufwand geschehen, denn das Fräsen und/oder Bohren der einfach aufgebauten Durchtrittsöffnungen ist eine bekannte Aufgabe.

Es kann weiterhin vorgesehen sein, dass die Zentralöffnung bis zu der zweiten Stirnseite hin eingepresst wird. Mit dem Einpressvorgang der Zentralöffnung entsteht also bereits ein beidseitig geöffneter hohler Zylinder. Wie schon im Zusammenhang mit einem Einpressen der Überleitungskanäle bis hin zur zweiten Stirnseite erwähnt wurde, kann hierdurch jedoch eine Nachbearbeitung erforderlich werden, da das Durchpressen bis zur zweiten Stirnseite unsaubere Materialgrenzen erzeugen kann.

Insofern kann auch nützlich sein, dass das Einpressen der Zentralöffnung vor einem Erreichen der zweiten Stirnseite endet und dass die zweite Stirnseite im Anschluss an das Einpressen materialabtragend entfernt wird, so dass die Zentralöffnung zu einer hierdurch entstehenden neuen zweiten Stirnseite offen ist. Hierdurch wird eine Erzeugung unsauberer Materialgrenzen vermieden. Da auch bei einem Durchpressen der Zentralöffnung eine materialabtragende Nachbehandlung kaum vermieden werden kann, kann auch sogleich in der Weise vorgegangen werden, dass erst gar nicht bis zur zweiten Stirnseite durchgepresst wird.

Es kann auch vorgesehen sein, dass die erste Stirnseite nach dem Umformen materialabtragend entfernt wird, so dass eine neue erste Stirnseite entsteht. Die Stirnseiten der Spindelmutter können also beide materialabtragend nachbehandelt werden, um sie so insbesondere auf Maß zu bringen.

Dies geschieht nützlicherweise vorteilhaft dadurch, dass das materialabtragende Entfernen der Stirnseiten durch Drehen erfolgt.

Weiterhin ist vorgesehen, dass nach dem Umformen ein Innengewinde in die Zentralöffnung eingebracht wird. Ein Fräsvorgang mit anschliessender Umformung ist das Mittel der Wahl, um in die Spindelmutter ein Gewinde einzubringen.

Weiterhin kann vorgesehen sein, dass beim Umformen des Werkstücks achsparallele Abflachungen in die Mantelfläche geformt werden. Diese Abflachungen dienen insbesondere der Zentrierung des Werkstücks bei der materialabtragenden Nachbehandlung.

Die Erfindung besteht weiterhin in einer Spindelmutter für einen Kugelgewindetrieb, die insbesondere durch das zuvor beschriebene Verfahren erhältlich ist, wobei die Spindelmutter in ihrer Mantelfläche mindestens einen ersten und einen zweiten achsparallelen Kanal aufweist, die zu einer Stirnseite der Spindelmutter hin offen sind.

Weiterhin betrifft die Erfindung einen Kugelgewindetrieb mit einer derartigen Spindelmutter, einer Spindel, einer Vielzahl an Kugeln, mindestens zwei Umlenkeinsätzen in jedem Überleitungskanal und mindestens einer Überleitungskanalabdeckung.

Die Erfindung wird nun mit Bezug auf die begleitenden Zeichnungen anhand besonders bevorzugter Ausführungsformen beispielhaft erläutert.
- Figur 1: zeigt eine perspektivische Darstellung eines Werkstücks;
- Figur 2: zeigt eine perspektivische Darstellung einer erfindungsgemäßen Spindelmutter;
- Figur 3: zeigt eine perspektivische Darstellung eines Umlenkeinsatzes;
- Figur 4: zeigt eine Schnittansicht eines erfindungsgemäßen Kugelgewindetriebs;
- Figur 5: zeigt eine perspektivische Darstellung eines erfindungsgemäßen Kugelgewindetriebs;
- Figur 6: zeigt eine perspektivische Darstellung eines erfindungsgemäßen Kugelgewindetriebs mit fortgelassener Spindelmutter;
- Figur 7: zeigt eine Frontansicht auf eine erfinderische Spindelmutter mit der Winkelanordnung zweier eingepresster Kanäle
- Figur 8: zeigt ein Flussdiagramm eines erfindungsgemäßen Verfahrens.

Figur 1 zeigt eine perspektivische Darstellung eines Werkstücks 50. Das Werkstück 50, von welchem das erfindungsgemäße Verfahren zum Herstellen einer Spindelmutter ausgeht, ist zylindrisch, und es besteht aus Vollmaterial, insbesondere aus einem Metall oder aus einer Metalllegierung. Es ist keineswegs erforderlich, dass das Werkstück zylindrisch gewählt wird, denn beim nachfolgenden Umformvorgang kann auch aus nicht zylindrischen Werkstücken eine Spindelmutter geformt werden. Allerdings wird die zylindrische Form des Werkstücks diejenige sein, welche fast ausschließlich gewählt wird, denn das Werkstück 50 ist in den meisten Fällen schlicht ein Stück eines Drahtes. Es ist auch nicht erforderlich, dass das Werkstück 50 aus Vollmaterial besteht. Beispielsweise kann das Werkstück eine zentrale Bohrung aufweisen, um das beim nachfolgenden Umformvorgang zu verdrängende Material in seiner Menge zu reduzieren. Das Werkstück 50 hat eine Mantelfläche 14, eine erste Stirnseite 46 und eine zweite Stirnseite 44.

Figur 2 zeigt eine perspektivische Darstellung einer erfindungsgemäßen Spindelmutter 10. Die Spindelmutter 10 hat eine Mantelfläche 14 sowie zwei Stirnseiten 30, 32. Ferner sind in die Mantelfläche 14 zwei gegenüberliegende, also um 180 Grad versetzte, Kanäle 18, 20 eingepresst, wobei der erste Kanal 18 als Überleitungskanal ausgebildet ist. Beide Kanäle sind zur ersten Stirnseite 32 hin offen. Im ersten Kanal 18sind radial verlaufende Durchtrittsöffnungen 22, 24 vorgesehen. Die in die Spindelmutter 10 eingepresste Zentralöffnung 16 ist mit einem Innengewinde 34 ausgestattet. Die Mantelfläche 14 der Spindelmutter 10 ist mit Abflachungen 36, 38 versehen.

Ausgehend von dem Werkstück 50 gemäß Figur 1 wird die Spindelmutter 10 gemäß Figur 2 gefertigt, indem zunächst gleichzeitig die Zentralöffnung 16 und die Überleitungskanäle 18, 20 eingepresst werden. Die Zentralöffnung 16 wird dabei durchgepresst, so dass die zu beiden Stirnseiten 44, 46 des Werkstücks 50 hin offen ist. Die Überleitungskanäle 18, 20 werden nicht bis zur zweiten Stirnseite 44 durchgepresst, so dass sie nur zur ersten Stirnseite 46 hin offen sind. Die Abflachungen 36, 38 werden auch bei dem Umformvorgang erzeugt. Im Anschluss an das Umformen erfolgen mehrere materialabtragende Verfahrensschritte. Diese können in verschiedener Reihenfolge stattfinden. Insbesondere werden radial verlaufende Durchtrittsöffnungen 32, 34 in die Überleitungskanäle 18, 20 gefräst und/oder gebohrt. Die Stirnseiten 44, 46 werden durch einen Drehvorgang gesäubert und zu den Stirnseiten 30, 32 der Spindelmutter 10 auf Maß gedreht. Das Innengewinde 34 wird gefräst. Dass die Stirnseite 44, zu der die Zentralöffnung 16 hin durchgepresst wird einem Drehvorgang unterzogen wird, ist kaum zu vermeiden, denn beim Durchtritt des Umformwerkzeugs durch die Zentralöffnung 16 wird quasi unweigerlich eine unsaubere Kante erzeugt. Eher ist das Abdrehen der ersten Stirnseite 46 entbehrlich, wobei jedoch auch hier durch das Ansetzen des Umformwerkzeugs Unsauberkeiten vorliegen können, die in nützlicher Weise durch Drehen beseitigt werden.

Figur 3 zeigt eine perspektivische Darstellung eines Umlenkeinsatzes 26. Derartige Umlenkeinsätze 26 werden in die Durchtrittsöffnungen 22, 24 der Spindelmutter 10 eingesetzt. Zur Entnahme der Kugeln aus dem Gewinde der Spindel bzw. der Spindelmutter laufen diese in zum Beispiel die Aufnahme 52 ein, sie werden radial nach außen transportiert und über den Transferbereich 56 in den Überleitungskanal der Spindelmutter abgegeben. Die Abgabe der Kugeln aus dem Überleitungskanal erfolgt in umgekehrter Reihenfolge, also durch Eintritt aus dem Überleitungskanal in den Transferbereich 56, Transport der Kugeln in die Aufnahme 52 und Abgabe der Kugeln in das Gewinde der Spindel bzw. Spindelmutter. Bei den Umlenkeinsätzen 26 handelt es sich insofern um spiegelsymmetrische Bauelemente, welche insbesondere als einstückige Spritzgussteile gefertigt sein können.

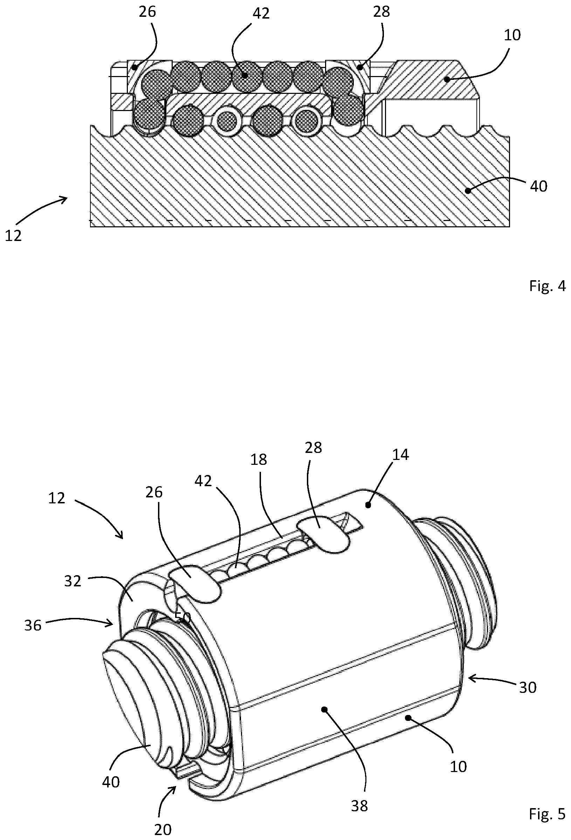

Figur 4 zeigt eine Schnittansicht eines erfindungsgemäßen Kugelgewindetriebs 12. Hier ist die Umlaufbahn der Kugeln 42 im Kugelgewindetrieb 12 zu erkennen. Die Spindelmutter 10 ist auf eine Spindel 40 aufgeschraubt. Die Umlenkeinsätze 26, 28 sind in die Spindelmutter 10 eingesetzt, und die Kugeln 42 laufen in ihrer Bahn.

Figur 5 zeigt eine perspektivische Darstellung eines erfindungsgemäßen Kugelgewindetriebs 12. Der Kugelgewindetrieb 12 umfasst eine Spindel 40, Kugeln 42, Umlenkeinsätze 26, 28 und eine Spindelmutter 10, wobei letztere die im Zusammenhang mit Figur 2 erläuterten Merkmale aufweist. In der Regel wird der Kugelgewindetrieb 12 zur Komplettierung noch eine oder mehrere (Überleitungs-)Kanalabdeckungen aufweisen. Diese sorgen dafür, dass die Umlenkeinsätze 26, 28 möglichst spielfrei in den Durchtrittsöffnungen 22, 24 sitzen und insbesondere nicht aus den Durchtrittsöffnungen 22, 24 herausfallen.

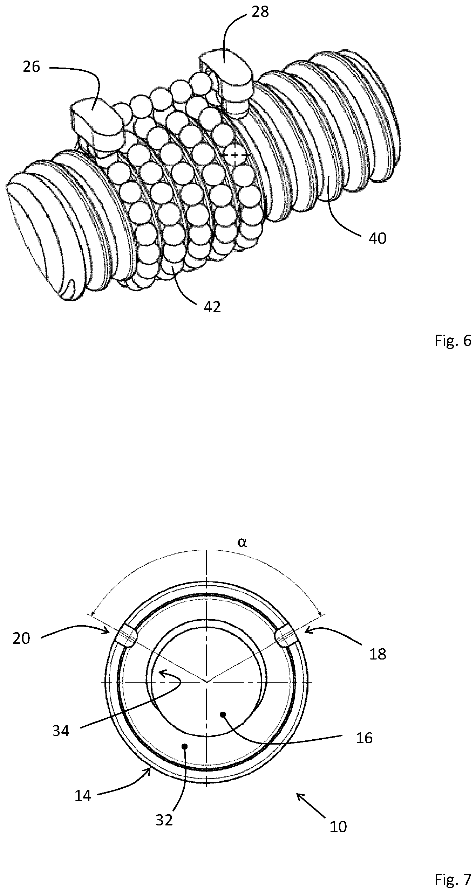

Figur 6 zeigt eine perspektivische Darstellung eines erfindungsgemäßen Kugelgewindetriebs 12 mit fortgelassener Spindelmutter. Die hier dargestellte Anordnung ist theoretischer Natur, da sie in der Praxis nicht darstellbar ist. Sie veranschaulicht lediglich die Bahn der Kugeln 42 in der Spindel 40 und in den Umlenkeinsätzen 26, 28, wobei insbesondere die achsparallele Bahn der Kugeln 42 zwischen den Umlenkeinsätzen 26, 28 zu erkennen ist, welche von den nicht dargestellten Überleitungskanälen gebildet wird.

Die erfindungsgemäße Spindelmutter 10 wurde im Zusammenhang mit den Figuren 1 bis 6 anhand eines Ausführungsbeispiels erläutert, bei dem zwei Überleitungskanäle 18, 20, also ein Überleitungskanalpaar, vorgesehen sind. Ebenfalls ist es möglich, mehr als ein Überleitungskanalpaar einzupressen. Weiterhin wurde die Erfindung anhand eines Ausführungsbeispiels erläutert, bei dem zwei Umlenkeinsätze 26, 28 pro Überleitungskanal 18, 20 vorgesehen sind. Ist der Überleitungskanal lang genug, so können auch mehr als ein solches Umlenkeinsatzpaar vorgesehen sein. Man erhält so mehrere Kugelbahnen pro Überleitungskanal. Um mehr als zwei Umlenkeinsätze 26, 28 in einen Überleitungskanal 18, 20 einzusetzen, muss eine entsprechende Anzahl von Durchtrittsöffnungen vorgesehen sein.

Figur 7 ist die Frontansicht in axialer Richtung auf die Stirnseite 32 einer erfinderischen Spindelmutter 10. Die Figur zeigt die Zentralöffnung 16 mit dem angedeuteten Innengewinde 34. Die eingepressten Kanäle 18 und 20 (hier im Querschnitt gleich ausgeführt) sind um einem Winkel α = 120° in der Mantelfläche 14 relativ zur Mittenlängsachse der Spindelmutter 10 angeordnet. Die gezeigte Anordnung ist exemplarisch, der technisch sinnvolle Winkelbereich liegt zwischen 100° und 180° (jeweils einschliesslich). Bei α = 180° liegen die Kanäle 18 und 20 diametral einander gegenüber.

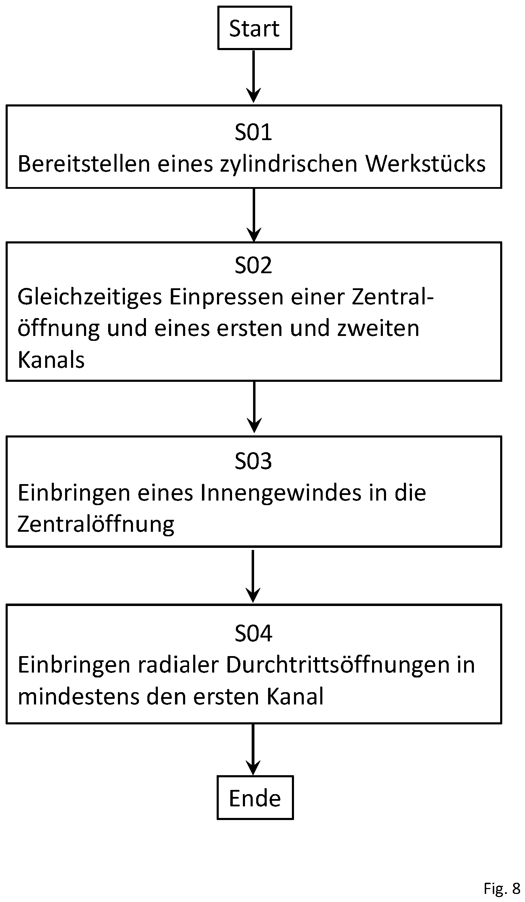

Figur 8 zeigt ein Flussdiagramm eines erfindungsgemäßen Verfahrens. Das Verfahren beginnt in Schritt S01 durch Bereitstellen eines zylindrischen Werkstücks, welches eine erste und eine zweite Stirnseite sowie eine Mantelfläche aufweist. In Schritt S02 wird das Werkstück umgeformt, indem gleichzeitig eine Zentralöffnung und ein Paar achsparallele Kanäle in die Mantelfläche eingepresst werden. Die Zentralöffnung und die Kanäle werden dabei ausgehend von einer ersten Stirnseite in das Werkstück eingepresst. Die Überleitungskanäle sind also immer zu der ersten Stirnseite hin offen. Als ein weiterer Prozessschritt S03 wird in die Zentralöffnung das Innengewinde eingebracht. Im Anschluss daran kommt es in Schritt S04 zu einem materialabtragenden Verfahrensschritt. Es werden radial verlaufende Durchtrittsöffnungen in mindestens den ersten Kanal eingebracht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Herstellen einer metallischen Spindelmutter (10) für einen Kugelgewindetrieb (12) mit den Schritten:
- Bereitstellen eines im Wesentlichen zylindrischen Werkstücks (50) aus Metall mit einer ersten Stirnseite (46) und einer zweiten Stirnseite (44) sowie einer Mantelfläche (14),
- Umformen des Werkstücks (50) durch Einpressen einer axialsymmetrischen Zentralöffnung (16) und durch gleichzeitiges Einpressen mindestens eines ersten (18) und eines zweiten (20), achsparallel ausgerichteten Kanals in die Mantelfläche (14) des Werkstücks (50), wobei die Zentralöffnung (16) und die Kanäle (18, 20) zu der ersten Stirnseite (46) hin offen sind, und
- Einbringen eines Innengewindes (34) in die Zentralöffnung (16), und
- Ausbilden mindestens des ersten Kanals (18) als Überleitungskanal durch Einbringen von mindestens zwei radial verlaufenden Durchtrittsöffnungen (22, 24) in besagten Kanal (18) zur Aufnahme von Umlenkeinsätzen (26, 28).

2. Verfahren nach Anspruch 1, **dadurch gekennzeichnet, dass** der zweite Kanal (20), wenn nicht als Überleitungskanal ausgebildet, mit vereinfachtem Querschnitt hergestellt wird, wobei die Einpresstiefe in Längsrichtung sowie das Volumen an umgeformtem Material des zweiten Kanals (20) dem des ersten Kanals (18) im Wesentlichen entspricht.

3. Verfahren nach Anspruch 1 oder 2, **dadurch gekennzeichnet, dass** das Einpressen der Kanäle (18, 20) vor dem Erreichen der zweiten Stirnseite endet, so dass die Kanäle (18, 20) zu der zweiten Stirnseite (44) hin geschlossen sind.

4. Verfahren nach den vorhergehenden Ansprüchen, **dadurch gekennzeichnet, dass** die Durchtrittsöffnungen (22, 24) gefräst und/oder gebohrt werden.

5. Verfahren nach den vorhergehenden Ansprüchen, **dadurch gekennzeichnet, dass** die Zentralöffnung (16) bis zu der zweiten Stirnseite (44) hin eingepresst wird.

6. Verfahren nach den Ansprüchen 1 bis 4, **dadurch gekennzeichnet, dass** das Einpressen der Zentralöffnung (16) vor einem Erreichen der zweiten Stirnseite (44) endet und dass die zweite Stirnseite (44) im Anschluss an das Einpressen materialabtragend entfernt wird, so dass die Zentralöffnung (16) zu der hierdurch entstehenden neuen zweiten Stirnseite (30) offen ist.

7. Verfahren nach den vorhergehenden Ansprüchen, **dadurch gekennzeichnet, dass** die erste Stirnseite (46) nach dem Umformen materialabtragend entfernt wird, so dass eine neue erste Stirnseite (32) entsteht.

8. Verfahren nach Anspruch 7, **dadurch gekennzeichnet, dass** das materialabtragende Entfernen der Stirnseiten (44, 46) durch Drehen erfolgt.

9. Verfahren nach den vorhergehenden Ansprüchen, **dadurch gekennzeichnet, dass** beim Umformen des Werkstücks (50) achsparallele Abflachungen (36, 38) in die Mantelfläche (14) geformt werden.

10. Verfahren nach den vorhergehenden Ansprüchen, **dadurch gekennzeichnet, dass** die Winkelanordnung der Kanäle in der Mantelfläche relativ zur Mittenlängsachse des Werkstücks zwischen 100° und 180° beträgt.

11. Verfahren nach Anspruch 10, **dadurch gekennzeichnet, dass** die Winkelanordnung der Kanäle in der Mantelfläche relativ zur Mittenlängsachse des Werkstücks bevorzugt im Wesentlichen 120° bzw. 180° beträgt.

12. Verfahren nach den vorhergehenden Ansprüchen, **dadurch gekennzeichnet, dass** die Herstellschritte "Einpressen der Zentralöffnung" und "Einpressen eines Kanals in die Mantelfläche" durch Kaltumformung erzielt werden.

13. Spindelmutter (10) für einen Kugelgewindetrieb (12), hergestellt durch das Verfahren nach einem oder mehreren der vorhergehenden Ansprüche, wobei die Spindelmutter (10) in ihrer Mantelfläche (14) mindestens ein Paar achsparalleler Kanäle (18, 20) aufweist, die zu einer Stirnseite (32) der Spindelmutter (10) hin offen sind und von denen mindestens einer als Überleitungskanal ausgebildet ist.

14. Kugelgewindetrieb (12) mit
- einer Spindelmutter (10) nach Anspruch 13,
- einer Spindel (40),
- einer Vielzahl an Kugeln (42),
- mindestens zwei Umlenkeinsätzen (26, 28) in mindestens einem als Überleitungskanal ausgebildeten Kanal (18) und
- mindestens einer Überleitungskanalabdeckung.

## Claims

1. Method for producing a metal spindle nut (10) for a ball screw drive (12), comprising the steps of:
- providing a substantially cylindrical workpiece (50) of metal having a first end face (46) and a second end face (44) and a lateral surface (14),
- forming the workpiece (50) by pressing an axially symmetrical central opening (16) and by simultaneously pressing at least a first (18) and a second (20), axis-parallel aligned channel into the lateral surface (14) of the workpiece (50), wherein the central opening (16) and the channels (18, 20) are open towards the first end face (46), and
- introducing an internal thread (34) into the central opening (16), and
- forming at least the first channel (18) as a transfer channel by introducing at least two radially extending passage openings (22, 24) into said channel (18) for accommodating deflection inserts (26, 28).

2. Method according to claim 1, **characterized in that** the second channel (20), when not formed as a transfer channel, is formed with a simplified cross-section, wherein the press-in depth in the longitudinal direction as well as the volume of formed material of the second channel (20) substantially corresponds to that of the first channel (18).

3. Method according to claim 1 or 2, **characterized in that** the pressing-in of the channels (18, 20) ends before reaching the second end face, so that the channels (18, 20) are closed towards the second end face (44).

4. Method according to the preceding claims, **characterized in that** the passage openings (22, 24) are milled and/or drilled.

5. Method according to the preceding claims, **characterized in that** the central opening (16) is pressed in as far as the second end face (44).

6. Method according to claims 1 to 4, **characterized in that** the pressing-in of the central opening (16) ends before the second end face (44) is reached, and **in that** the second end face (44) is removed by material removal following the pressing-in, so that the central opening (16) is open towards the new second end face (30) thus produced.

7. Method according to the preceding claims, **characterized in that** the first end face (46) is removed by material removal after forming so that a new first end face (32) is formed.

8. Method according to claim 7, **characterized in that** the material-removing removal of the end faces (44, 46) is performed by turning.

9. Method according to the preceding claims, **characterized in that** axis-parallel flattened portions (36, 38) are formed in the lateral surface (14) during forming of the workpiece (50).

10. Method according to the preceding claims, **characterized in that** the angular arrangement of the channels in the lateral surface relative to the central longitudinal axis of the workpiece is between 100° and 180°.

11. Method according to claim 10, **characterized in that** the angular arrangement of the channels in the lateral surface relative to the central longitudinal axis of the workpiece is preferably substantially 120° or 180°.

12. Method according to the preceding claims, **characterized in that** the manufacturing steps of "pressing-in the central opening" and "pressing-in a channel into the lateral surface" are achieved by cold forming.

13. Spindle nut (10) for a ball screw drive (12) produced by the method according to one or more of the preceding claims, wherein the spindle nut (10) has in its lateral surface (14) at least one pair of axis-parallel channels (18, 20) which are open towards an end face (32) of the spindle nut (10) and at least one of which is formed as a transfer channel.

14. Ball screw drive (12), comprising
- a spindle nut (10) according to claim 13,
- a spindle (40),
- of a plurality of balls (42),
- at least two deflection inserts (26, 28) in at least one channel (18) designed as a transfer channel, and
- at least one transfer channel cover.

## Revendications

1. Procédé de fabrication d'un écrou de broche métallique (10) pour une vis d'entraînement à billes (12) avec les étapes de :
- préparation d'une pièce pour l'essentiel cylindrique (50) en métal avec une première face avant (46) et une deuxième face avant (44) ainsi qu'une surface d'enveloppe (14),
- déformation de la pièce (50) par formation par enfoncement sous pression d'une ouverture centrale (16) axialement symétrique et par formation par enfoncement sous pression simultanée d'au moins un premier (18) et d'un deuxième conduit (20) orientés parallèlement à l'axe dans la surface d'enveloppe (14) de la pièce (50), sachant que l'ouverture centrale (16) et les conduits (18, 20) sont ouverts vers la première face avant (46), et
- aménagement d'un filetage intérieur (34) dans l'ouverture centrale (16), et
- constitution au moins du premier conduit (18) en tant que conduit de transmission par aménagement d'au moins deux ouvertures de passage passant radialement (22, 24) dans ledit conduit (18) pour loger des éléments de renvoi (26, 28).

2. Procédé selon la revendication 1, **caractérisé en ce que** le deuxième conduit (20), est réalisé avec une section simplifiée, s'il n'est pas constitué comme conduit de transmission, sachant que la profondeur de formation par enfoncement sous pression dans la direction longitudinale et le volume en matériau déformé du deuxième conduit (20) correspondent pour l'essentiel au premier conduit (18).

3. Procédé selon la revendication 1 ou 2, **caractérisé en ce que** la formation par enfoncement sous pression des conduits (18, 20) se termine avant d'atteindre la deuxième face avant de telle manière que les conduits (18, 20) sont fermés en direction de la deuxième face avant (44).

4. Procédé selon l'une des revendications précédentes, **caractérisé en ce que** les ouvertures de passage (22, 24) sont fraisées et/ou alésées.

5. Procédé selon l'une des revendications précédentes, **caractérisé en ce que** l'ouverture centrale (16) est formée par enfoncement sous pression jusqu'à la deuxième face avant (44).

6. Procédé selon les revendications 1 à 4, **caractérisé en ce que** la formation par enfoncement sous pression de l'ouverture centrale (16) se termine avant d'atteindre la deuxième face avant (44) et **en ce que** la deuxième face avant (44) est enlevée par enlèvement de métal à la suite de la formation par enfoncement sous pression de telle manière que l'ouverture centrale (16) est ouverte vers la deuxième face avant (30) nouvellement créée à cet effet.

7. Procédé selon les revendications précédentes, **caractérisé en ce que** la première face avant (46) est enlevée par enlèvement de métal après la déformation de telle sorte qu'une nouvelle première face avant (32) est créée.

8. Procédé selon la revendication 7, **caractérisé en ce que** l'enlèvement par enlèvement de métal des faces avant (44, 46) a lieu par rotation.

9. Procédé selon l'une quelconque des revendications précédentes, **caractérisé en ce que** lors de la déformation de la pièce (50), il se forme des méplats (36,38) parallèles à l'axe dans la surface d'enveloppe (14) .

10. Procédé selon l'une quelconque des revendications précédentes, **caractérisé en ce que** la disposition angulaire des conduits dans la surface d'enveloppe par rapport à l'axe longitudinal médian de la pièce se situe entre 100° et 180°.

11. Procédé selon la revendication 10, **caractérisé en ce que** la disposition angulaire des conduits dans la surface d'enveloppe par rapport à l'axe longitudinal médian de la pièce se situe de préférence pour l'essentiel à 120° ou 180°.

12. Procédé selon l'une quelconque des revendications précédentes, **caractérisé en ce que** les étapes de fabrication « Formation par enfoncement sous pression de l'ouverture centrale » et « Formation par enfoncement sous pression d'un conduit dans la surface d'enveloppe » sont obtenues par déformation à froid.

13. Ecrou de broche (10) pour une vis d'entraînement à billes (12), fabriqué par le procédé selon l'une quelconque des revendications précédentes, sachant que l'écrou de broche (10) comporte dans sa surface d'enveloppe (14) au moins une paire de conduits (18, 20) parallèle à l'axe, qui sont ouverts vers une face avant (32) de l'écrou de broche (10) et dont au moins un est constitué comme conduit de transmission.

14. Vis d'entraînement à billes (12) avec
- un écrou de broche (10) selon la revendication 13,
- une broche (40),
- une pluralité de billes (42),
- au moins deux éléments de renvoi (26, 28) dans au moins un conduit (18) constitué comme conduit de transmission,et
- au moins une couverture de conduit de transmission.
